(19) Europäisches Patentamt / European Patent Office / Office européen des brevets

(11) **EP 3 002 540 B1**

(12) **FASCICULE DE BREVET EUROPEEN**

(45) Date de publication et mention
de la délivrance du brevet:
**12.06.2019 Bulletin 2019/24**

(21) Numéro de dépôt: **15184064.2**

(22) Date de dépôt: **07.09.2015**

(51) Int Cl.:
**B60H 1/32** *(2006.01)*        **F28F 19/00** *(2006.01)*
**F28F 27/00** *(2006.01)*        **F28D 21/00** *(2006.01)*
**B60H 1/00** *(2006.01)*

(54) **ÉCHANGEUR DE CHALEUR D'UN DISPOSITIF DE CLIMATISATION ET DE CHAUFFAGE EN PARTICULIER D'UN VÉHICULE AUTOMOBILE**

**WÄRMETAUSCHER EINER KLIMA- UND HEIZANLAGE INSBESONDERE IN EINEM KRAFTFAHRZEUG**

**HEAT EXCHANGER OF AN AIR-CONDITIONING AND HEATING DEVICE, IN PARTICULAR OF A MOTOR VEHICLE**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.09.2014 FR 1459308**

(43) Date de publication de la demande:
**06.04.2016 Bulletin 2016/14**

(73) Titulaire: **VALEO SYSTEMES THERMIQUES
78320 Le Mesnil Saint-Denis (FR)**

(72) Inventeurs:
• **BEAUVIS, Régis
92150 SURESNES (FR)**
• **BENOUALI, Jugurtha
92800 PUTEAUX (FR)**
• **DELAFORGE, Laurent
78125 ORCEMONT (FR)**

(74) Mandataire: **Metz, Gaëlle
Valeo Systèmes Thermiques
8, rue Louis Lormand
CS 80517 La Verrière
78322 Le Mesnil Saint Denis Cedex (FR)**

(56) Documents cités:
WO-A1-2012/053958        JP-A- 2012 042 207
KR-B1- 101 340 979        US-A1- 2014 216 710

**Description**

L'invention concerne un échangeur de chaleur d'un dispositif de climatisation et de chauffage en particulier d'un véhicule automobile.

Dans les véhicules électriques, seule l'énergie électrique est utilisée pour les besoins de chauffage et de refroidissement. Il est plus particulièrement utilisé un dispositif de climatisation et de chauffage agencé de manière à fonctionner en mode pompe à chaleur. Ce type de dispositif de climatisation et de chauffage comporte un échangeur de chaleur, par exemple du type évapo-condenseur, disposé en face avant du véhicule, cet échangeur étant connecté à un évaporateur et un condenseur interne interconnectés par un compresseur ainsi qu'un dispositif de chauffage électrique tel qu'une résistance chauffante du type CTP (pour « Coefficient de Température Positif », et en anglais PTC pour « Positive Temperature Coefficient »).

Afin d'augmenter l'autonomie de tels véhicules automobiles, il est nécessaire d'optimiser l'efficacité d'un tel dispositif de climatisation et de chauffage.

Or, l'un des inconvénients d'un tel dispositif agencé de manière à fonctionner en mode pompe à chaleur est la formation de givre (ou de glace) sur l'échangeur de chaleur situé en face avant du véhicule, en effet lorsque la température descend au-dessous de 0°C, la formation de givre (ou de glace) à la surface dudit échangeur a pour conséquence une baisse d'efficacité dudit échangeur.

L'invention vise à résoudre au moins partiellement ce problème technique en proposant un échangeur de chaleur équipé d'un moyen de détection de la formation de glace selon la revendication 1 et un procédé pour limiter la formation de givre sur ledit échangeur de chaleur selon la revendication 11.

Le document JP2012042207 divulgue un échangeur de chaleur comprenant les caractéristiques du préambule de la revendication 1 ainsi qu'un procédé pour limiter la formation de givre sur un tel échangeur de chaleur. L'invention consiste en un échangeur de chaleur pour un dispositif de climatisation et de chauffage de véhicule automobile qui est apte à fonctionner en mode pompe à chaleur, caractérisé en ce qu'il est équipé :

- d'un premier capteur apte à mesurer la température d'une paroi dudit échangeur,
- d'un deuxième capteur apte à mesurer l'humidité relative et la température de l'air ambiant.

Lesdits premier et deuxième capteurs sont disposés dans un dispositif de détection unique.

Un tel dispositif de détection unique comprenant les deux capteurs permet, d'une part, de réduire l'encombrement dudit dispositif et, d'autre part, la mesure de grandeurs physiques (température, humidité relative...) les plus pertinentes et cohérentes possibles les unes par rapport aux autres.

Selon une autre caractéristique possible, l'échangeur de chaleur comporte au moins une boîte collectrice, ledit dispositif de détection étant fixé à ladite au moins une boîte collectrice.

Selon une autre caractéristique possible, ledit dispositif de détection étant fixé par clippage à ladite au moins une boîte collectrice.

Le fait de fixer le dispositif de détection par clippage est particulièrement avantageux, car celui-ci peut être facilement déplacé dans une zone de l'échangeur de chaleur où la mesure de valeurs de température ou d'humidité est plus pertinente. Cela permet aussi un positionnement plus aisé dudit dispositif de détection en fonction de l'encombrement stérique d'éléments adjacent audit échangeur.

Selon une autre caractéristique possible, ledit premier capteur est une thermistance à coefficient de température négatif disposée au contact de ladite au moins une boîte collectrice.

Avantageusement, une thermistance à coefficient de température négatif est un moyen de mesure de la température qui est robuste et peu onéreux.

Selon une autre caractéristique possible, ledit échangeur de chaleur comporte une partie centrale au niveau de laquelle se produit un échange de chaleur entre au moins deux fluides.

Selon une autre caractéristique possible, la partie centrale dudit échangeur de chaleur est un faisceau de tubes ou un empilement de plaques.

Selon une autre caractéristique possible, ledit deuxième capteur est disposé parallèlement à une surface de ladite partie centrale dudit échangeur de chaleur.

Un positionnement parallèle du deuxième capteur par rapport à la surface de la partie centrale de l'échangeur de chaleur améliore la fiabilité des mesures d'humidité relative et de la température de l'air ambiant effectuées par l'intermédiaire dudit deuxième capteur.

Selon une autre caractéristique possible, l'échangeur de chaleur comporte au moins une boîte collectrice disposée à chacune des deux extrémités opposées de la partie centrale, lesdites extrémités dudit échangeur présentant chacune une hauteur H, lesdits premier et deuxième capteurs étant disposés à une distance h, mesurée à partir d'une extrémité dudit échangeur où est située une entrée de fluide, supérieure ou égale à 30% de la hauteur H.

Selon une autre caractéristique possible, lesdits premier et deuxième capteurs sont reliés à une alimentation électrique commune.

Selon une autre caractéristique possible, lesdits premier et deuxième capteurs sont disposés à une distance h comprise entre 60 et 75% de la hauteur H.

L'invention concerne également un procédé pour limiter la formation de givre sur un échangeur de chaleur tel que décrit précédemment, caractérisé en ce qu'une valeur de la température de rosée $T_{ros}$ est calculée au moyen de valeurs mesurées de l'humidité relative et de la température de l'air ambiant $T_{amb}$, cette valeur de température calculée du point de rosée $T_{ros}$ étant comparée à une valeur mesurée de la température de la paroi dudit échangeur, des mesures pour limiter la formation de givre sur ledit échangeur étant appliquées lorsque la différence $\Delta T$ entre les valeurs mesurées de la température de paroi et de la température du point de rosée sont inférieure à une fonction mathématique dépendant des valeurs mesurées de la température de l'air ambiant $T_{amb}$ et de la température du point de rosée $T_{ros}$.

Lesdites mesures pour limiter la formation de givre sur ledit échangeur sont appliquées si la température de paroi dudit échangeur est, d'une part, inférieure à 0°C et, d'autre part, inférieure ou égale à la température du point de rosée $T_{ros}$.

Selon une autre caractéristique possible, lesdites mesures de limitation de givrage sont mises en fonction lorsque l'inégalité suivante est vérifiée :

$$\Delta T \leq \left(\frac{Tamb+400}{273}\right)^a \cdot \left(\frac{273}{Tros+273}\right)^b$$

avec le paramètre a qui est compris entre 1,4 et 3,2 et le paramètre b qui est compris entre 9 et 16.

Selon une autre caractéristique possible, lesdites mesures de limitation de givrage sont appliquées afin d'obtenir une différence $\Delta T$ entre la température de paroi et la température du point de rosée $T_{ros}$ inférieure à 4,5 °C, après 4 à 10 min de fonctionnement du dispositif de climatisation et de chauffage de véhicule automobile lorsqu'il est en mode pompe à chaleur. On notera que la différence entre la température de paroi et la température du point de rosée $T_{ros}$ est avantageusement inférieure à 3 °C, et préférentiellement à 2 °C.

Selon une autre caractéristique possible, ledit échangeur est connecté à un compresseur, lesdites mesures de limitation de givrage pouvant être l'une ou plusieurs des actions suivantes :

- augmentation de la vitesse du flux d'air traversant l'échangeur,
- diminution de la vitesse du compresseur.

Selon une autre caractéristique possible, ledit dispositif de chauffage et de climatisation comprend un dispositif de chauffage électrique, ledit procédé comportant au moins l'une des mesures de compensation du confort thermique suivantes :

- augmentation de la puissance thermique délivrée par le dispositif de chauffage électrique,
- augmentation du pourcentage d'air recyclé qui provient de l'habitacle et traversant l'échangeur.

L'invention sera mieux comprise, et d'autres buts, détails, caractéristiques et avantages de celle-ci apparaîtront plus clairement au cours de la description suivante d'un mode de réalisation particulier de l'invention, donnée uniquement à titre illustratif et non limitatif, en référence aux dessins annexés, sur lesquels :

- la figure 1 représente une vue schématique d'un dispositif de climatisation et de chauffage de véhicule automobile, en particulier électrique, qui, d'une part, est apte à fonctionner en mode pompe à chaleur et, d'autre part, comprend un échangeur de chaleur selon l'invention ;
- la figure 2 est une vue de face d'un échangeur de chaleur selon l'invention ;
- la figure 3 est une vue en coupe, selon un plan horizontal, et partielle de l'échangeur de chaleur de la figure 2 ;
- la figure 4 est une vue en coupe, selon un plan vertical, et partielle de l'échangeur de chaleur de la figure 2.

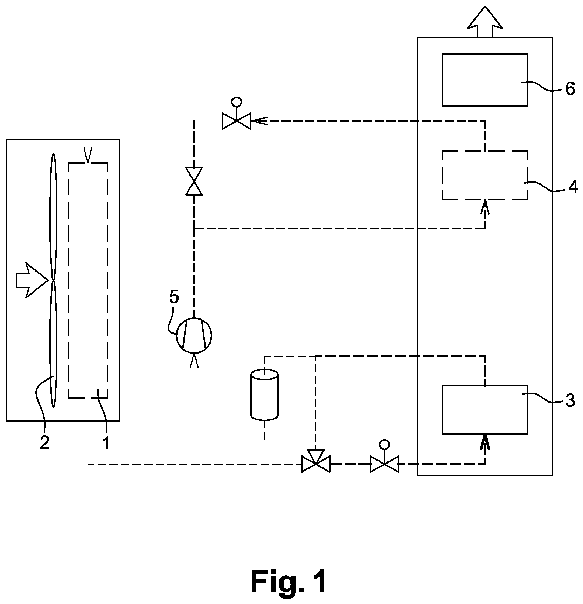

La figure 1 représente un dispositif de climatisation et de chauffage de véhicule automobile, en particulier électrique, apte à fonctionner en mode pompe à chaleur. Ledit dispositif de climatisation et de chauffage comprend un échangeur de chaleur 1 selon l'invention, disposé en face avant du véhicule et pouvant être associé à un ventilateur 2. Ledit échangeur de chaleur est connecté, d'une part, à un évaporateur interne 3 et, d'autre part, à un condenseur interne 4.

On notera que l'échangeur de chaleur 1 selon l'invention est, dans le mode de réalisation présenté, un évapo-condenseur mais peut être tout type d'échangeur de chaleur présentant un risque de givrer.

Lesdits évaporateur interne 3 et condenseur interne 4 sont eux-mêmes interconnectés par l'intermédiaire d'un compresseur 5.

Ledit dispositif de climatisation et de chauffage peut également comporter, comme dans le mode de réalisation présenté, un dispositif de chauffage électrique 6. Ledit dispositif de chauffage électrique 6 est, par exemple, une résistance chauffante du type CTP (pour « Coefficient de Température Positif », et en anglais PTC pour « Positive Temperature Coefficient »).

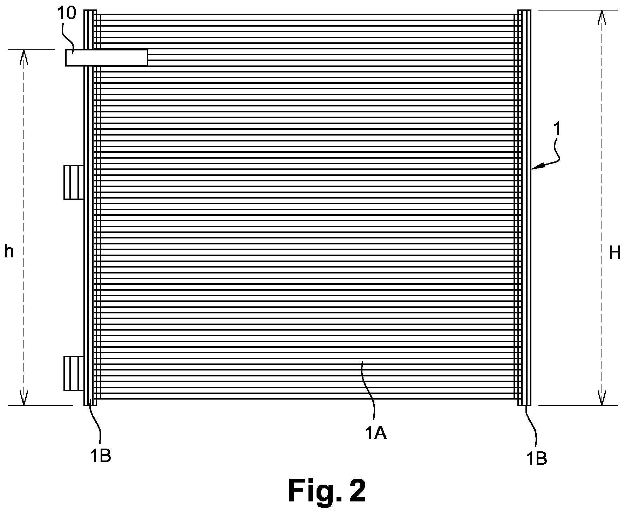

Comme représenté sur la figure 2, l'échangeur de chaleur 1 comporte une partie centrale 1A et deux boîtes collectrices 1B, chacune desdites boîtes collectrices étant disposées à deux extrémités opposées de la partie centre 1A.

Plus particulièrement, la partie centrale 1A est généralement un faisceau de tubes ou un empilement de plaques au niveau de laquelle se produit un échange de chaleur entre au moins deux fluides. Lesdits au moins deux fluides sont par exemple, d'une part, un flux d'air traversant la partie centrale 1A (le flux d'air est donc extérieur audit échangeur de chaleur) et, d'autre part, un liquide réfrigérant ou un liquide caloporteur qui circule à l'intérieur dudit échangeur de chaleur 1.

On notera que le liquide réfrigérant ou caloporteur circulant dans l'échangeur de chaleur entre et sort de celui-ci, respectivement par une entrée de fluide et une sortie de fluide. L'entrée et la sortie de fluide peuvent être disposées sur la même boîte collectrice ou sur des boîtes collectrices distinctes.

De plus, les extrémités de l'échangeur de chaleur 1 sur lesquelles est disposée une boîte collectrice 1B présentent chacune une hauteur H.

Par ailleurs, ledit échangeur de chaleur 1 est équipé :

- d'un premier capteur 11 apte à mesurer la température d'une paroi dudit échangeur,
- d'un deuxième capteur 12 apte à mesurer l'humidité relative et la température de l'air ambiant.

Lesdits premier et deuxième capteurs 11 et 12 sont disposés à une distance, mesurée à partir d'une extrémité dudit échangeur où est située une entrée de fluide, supérieure ou égale à 30% de la hauteur H.

Plus particulièrement, lesdits premier et deuxième capteurs 11 sont, tel qu'illustré dans le présent mode de réalisation, disposés dans un dispositif de détection 10 unique.

Le dispositif de détection 10 ou lesdits deux capteurs 11 et 12 sont, de préférence, disposés à une distance h, mesurée à partir d'une extrémité dudit échangeur où est située une entrée de fluide, supérieure ou égale à 30% de la hauteur H. Préférentiellement, lesdits premier et deuxième capteurs sont disposés à une distance h comprise entre 60 et 75% de la hauteur H.

En effet, cela correspond à une zone de l'échangeur de chaleur la plus froide et donc la plus propice à la formation de givre.

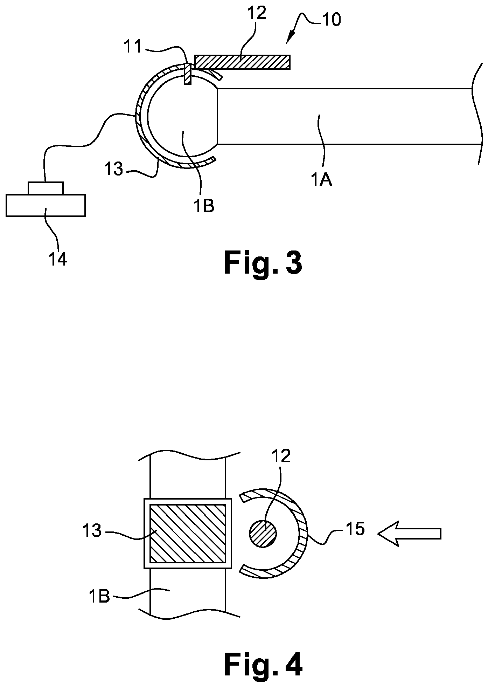

Comme représenté aux figures 2 à 4, le dispositif de détection unique 10 comprenant lesdits capteurs 11 et 12 est fixé par clippage à l'un des collecteurs 1B au moyen d'une coque 13 de section semi-cylindrique (plus particulièrement visible sur les figures 3 et 4).

Cette coque 13 porte le premier capteur 11 qui est, dans le mode de réalisation présent, une thermistance à coefficient de température négatif disposée en contact avec la boîte collectrice 1B.

Par ailleurs, le deuxième capteur 11 est disposé parallèlement à une surface de ladite partie centrale. De plus, le deuxième capteur 12 est protégé par une coque de couvercle 15 le protégeant des projections d'eau.

Lesdits premier et deuxième capteurs 11 et 12 sont reliés à une alimentation électrique commune 14 (plus particulièrement visible à la figure 3).

L'invention concerne également un procédé pour limiter la formation de givre sur un échangeur de chaleur tel que décrit précédemment.

Ledit procédé selon l'invention, comporte les étapes suivantes :

- étape de calcul, au moyen de valeurs mesurées de l'humidité relative et de la température de l'air ambiant $T_{amb}$, d'une valeur de la température de rosée $T_{ros}$ ;

- étape de mesure de la température de la paroi de l'échangeur de chaleur 1 ;
- étape de comparaison de la valeur calculée de température du point de rosée $T_{ros}$ par rapport à ladite valeur de la température de la paroi dudit échangeur 1 ;
- étape de mise en application de mesures pour limiter la formation de givre sur ledit échangeur 1 lorsque la différence $\Delta T$ entre les valeurs de la température de paroi et de la température du point de rosée est inférieure à une fonction mathématique dépendant des valeurs mesurées de la température de l'air ambiant $T_{amb}$ et de la température du point de rosée $T_{ros}$.

On notera que les valeurs d'humidité relative et de température de l'air ambiant sont des valeurs mesurées au moyen des premier et deuxième capteurs 11 et 12.

Le risque de présence de glace est constaté, lorsque la température de paroi est inférieure à 0°C et est inférieure ou égale à la température du point de rosée, l'eau atteignant sa température de condensation.

Lesdites mesures de limitation de givrage sont plus particulièrement appliquées lorsque l'inégalité suivante est vérifiée :

$$\Delta T \leq \left(\frac{\text{Tamb}+400}{273}\right)^a \cdot \left(\frac{273}{\text{Tros}+273}\right)^b$$

avec le paramètre a qui est compris entre 1,4 et 3,2 et le paramètre b qui est compris entre 9 et 16.

Les mesures de limitation de givrage sont, en variante, appliquées, afin d'obtenir une différence entre la température de paroi et la température du point de rosée inférieure à 4,5 °C et, de préférence inférieure à 3 °C et avantageusement inférieure à 2 °C, après 4 à 10 mn de fonctionnement de la pompe à chaleur.

Lesdites mesures de limitation de givrage peuvent être l'une ou plusieurs des actions suivantes :

- augmentation de la vitesse du flux d'air traversant l'échangeur 1,
- diminution de la vitesse du compresseur 5 (il y a donc diminution de la vitesse du fluide circulant à l'intérieur dudit échangeur de chaleur 1).

Le procédé peut également comprendre l'une ou plusieurs des mesures de compensation du confort thermique suivantes :

- augmentation de la puissance thermique délivrée par le dispositif de chauffage électrique 6,
- augmentation du pourcentage d'air recyclé qui provient de l'habitacle et traversant ledit échangeur 1.

## Revendications

1. Echangeur de chaleur (1) pour un dispositif de climatisation et de chauffage de véhicule automobile qui est apte à fonctionner en mode pompe à chaleur, **caractérisé en ce qu'**il est équipé :

   - d'un premier capteur (11) apte à mesurer la température d'une paroi dudit échangeur (1),
   - d'un deuxième capteur (12) apte à mesurer l'humidité relative et la température de l'air ambiant,

   **caractérisé en ce que** lesdits premier et deuxième capteurs (11 et 12) sont disposés dans un dispositif de détection (10) unique.

2. Echangeur selon la revendication 1, **caractérisé en ce qu'**il comporte au moins une boîte collectrice (1B), ledit dispositif de détection (10) étant fixé à ladite au moins une boîte collectrice (1B).

3. Echangeur selon la revendication 2, **caractérisé en ce que** ledit dispositif de détection (10) est fixé par clippage à ladite au moins une boîte collectrice (1B).

4. Echangeur selon l'une des revendications précédentes, **caractérisé en ce que** ledit premier capteur (11) est une thermistance à coefficient de température négatif disposée au contact de ladite au moins une boîte collectrice (1B).

5. Echangeur selon l'une des revendications précédentes, **caractérisé en ce qu'**il comporte une partie centrale (1A) au niveau de laquelle se produit un échange de chaleur entre au moins deux fluides.

6. Echangeur selon la revendication 5, **caractérisé en ce que** la partie centrale (1A) est un faisceau de tubes ou un empilement de plaques.

7. Echangeur selon la revendication 5 ou 6, **caractérisé en ce que** ledit deuxième capteur (12) est disposé parallèlement à une surface de ladite partie centrale (1A).

8. Echangeur selon l'une des revendications 5 à 7, **caractérisé en ce que** l'échangeur de chaleur comporte au moins une boîte collectrice (1B) disposées à chacune de deux extrémités opposées de la partie centrale (1A), lesdites extrémités dudit échangeur présentant une hauteur H, lesdits premier et deuxième capteurs (11, 12) étant disposés à une distance h, mesurée à partir d'une extrémité dudit échangeur où est située une entrée de fluide, supérieure ou égale à 30% de la hauteur H.

9. Echangeur selon la revendication précédente, **ca**ractérisé en ce que lesdits premier et deuxième capteurs (11, 12) sont disposés à une distance h comprise entre 60 et 75% de la hauteur H.

10. Echangeur selon l'une des revendications précédentes, **caractérisé en ce que** lesdits premier et deuxième capteurs (11, 12) sont reliés à une alimentation électrique commune (14).

11. Procédé pour limiter la formation de givre sur un échangeur de chaleur (1) selon l'une quelconque des revendications précédentes, une valeur de la température de rosée $T_{ros}$ étant calculée au moyen de valeurs mesurées de l'humidité relative et de la température de l'air ambiant $T_{amb}$, cette valeur de température du point de rosée $T_{ros}$ étant comparée à une valeur mesurée de la température de la paroi dudit échangeur (1),
des mesures pour limiter la formation de givre sur ledit échangeur (1) étant appliquées lorsque la différence $\Delta T$ entre les valeurs de la température de paroi dudit échangeur (1) et de la température du point de rosée est inférieure à une fonction mathématique dépendant des valeurs de température de l'air ambiant $T_{amb}$ et de la température du point de rosée $T_{ros}$,
**caractérisé en ce que** lesdites mesures pour limiter la formation de givre sur ledit échangeur (1) sont appliquées si la température de paroi dudit échangeur (1) est, d'une part, inférieure à 0°C et, d'autre part, inférieure ou égale à la température du point de rosée $T_{ros}$.

12. Procédé selon la revendication 11, **caractérisé en ce que** lesdites mesures de limitation de givrage sont appliquées lorsque l'inégalité suivante est vérifiée :

$$\Delta T \leq \left(\frac{\text{Tamb}+400}{273}\right)^a \cdot \left(\frac{273}{\text{Tros}+273}\right)^b$$

avec le paramètre a qui est compris entre 1,4 et 3,2 et le paramètre b qui est compris entre 9 et 16.

## Patentansprüche

1. Wärmetauscher (1) für eine Klimatisierungs- und Heizvorrichtung eines Kraftfahrzeugs, die im Wärmepumpenmodus arbeiten kann, **dadurch gekennzeichnet, dass** er ausgestattet ist mit:

   - einem ersten Sensor (11), der die Temperatur einer Wand des Tauschers (1) messen kann,
   - einem zweiten Sensor (12), der die relative Feuchtigkeit und die Temperatur der Umgebungsluft messen kann,

**dadurch gekennzeichnet, dass** die ersten und zweiten Sensoren (11 und 12) in einer einzigen Erfassungsvorrichtung (10) angeordnet sind.

2. Tauscher nach Anspruch 1, **dadurch gekennzeichnet, dass** er mindestens einen Sammelbehälter (1B) aufweist, wobei die Erfassungsvorrichtung (10) am mindestens einen Sammelbehälter (1B) befestigt ist.

3. Tauscher nach Anspruch 2, **dadurch gekennzeichnet, dass** die Erfassungsvorrichtung (10) durch Einklinken am mindestens einen Sammelbehälter (1B) befestigt ist.

4. Tauscher nach einem der vorhergehenden Ansprüche, **dadurch gekennzeichnet, dass** der erste Sensor (11) ein Thermistor mit negativem Temperaturkoeffizient ist, der in Kontakt mit dem mindestens einen Sammelbehälter (1B) angeordnet ist.

5. Tauscher nach einem der vorhergehenden Ansprüche, **dadurch gekennzeichnet, dass** er einen zentralen Teil (1A) aufweist, in dessen Bereich ein Wärmeaustausch zwischen mindestens zwei Fluiden stattfindet.

6. Tauscher nach Anspruch 5, **dadurch gekennzeichnet, dass** der zentrale Teil (1A) ein Bündel von Rohren oder ein Stapel von Platten ist.

7. Tauscher nach Anspruch 5 oder 6, **dadurch gekennzeichnet, dass** der zweite Sensor (12) parallel zu einer Fläche des zentralen Teils (1A) angeordnet ist.

8. Tauscher nach einem der Ansprüche 5 bis 7, **dadurch gekennzeichnet, dass** der Wärmetauscher mindestens einen Sammelbehälter (1B) aufweist, der an jedem von zwei gegenüberliegenden Enden des zentralen Teils (1A) angeordnet ist, wobei die Enden des Tauschers eine Höhe H aufweisen, wobei die ersten und zweiten Sensoren (11, 12) in einem Abstand h größer als oder gleich 30% der Höhe H, gemessen ausgehend von einem Ende des Tauschers, an sich ein Fluideingang befindet, angeordnet sind.

9. Tauscher nach dem vorhergehenden Anspruch, **dadurch gekennzeichnet, dass** die ersten und zweiten Sensoren (11, 12) in einem Abstand h angeordnet sind, der zwischen 60 und 75% der Höhe H liegt.

10. Tauscher nach einem der vorhergehenden Ansprüche, **dadurch gekennzeichnet, dass** die ersten und zweiten Sensoren (11, 12) mit einer gemeinsamen Stromversorgung (14) verbunden sind.

11. Verfahren zum Begrenzen der Bildung von Reif auf einem Wärmetauscher (1) nach einem der vorhergehenden Ansprüche, wobei ein Wert der Tautemperatur $T_{ros}$ mittels gemessener Werte der relativen Feuchtigkeit und der Temperatur der Umgebungsluft $T_{amb}$ berechnet wird, wobei dieser Temperaturwert des Taupunkts $T_{ros}$ mit einem gemessenen Wert der Temperatur der Wand des Tauschers (1) verglichen wird,
wobei Maßnahmen zum Begrenzen der Bildung von Reif auf dem Tauscher (1) angewendet werden, wenn die Differenz $\Delta T$ zwischen den Werten der Wandtemperatur des Tauschers (1) und der Temperatur des Taupunkts geringer als eine mathematische Funktion ist, die von den Temperaturwerten der Umgebungsluft $T_{amb}$ und der Temperatur des Taupunkts $T_{ros}$ abhängt,
**dadurch gekennzeichnet, dass** die Maßnahmen zur Begrenzung der Bildung von Reif auf dem Tauscher (1) angewendet werden, wenn die Wandtemperatur des Tauschers (1) einerseits niedriger als 0°C und andererseits niedriger als die oder gleich der Temperatur des Taupunkts $T_{ros}$ ist.

12. Verfahren nach Anspruch 11, **dadurch gekennzeichnet, dass** die Maßnahmen zur Begrenzung von Reifbildung angewendet werden, wenn die folgende Ungleichheit erfüllt ist:

$$\Delta T \le \left( \frac{Tamb + 400}{273} \right)^a \cdot \left( \frac{273}{Tros + 273} \right)^b$$

mit dem Parameter a zwischen 1,4 und 3,2 und dem Parameter b zwischen 9 und 16.

## Claims

1. Heat exchanger (1) for an air conditioning and heating device for a motor vehicle that is able to operate in heat pump mode, **characterized in that** it is equipped with:

    - a first sensor (11) able to measure the temperature of a wall of said exchanger (1);
    - a second sensor (12) able to measure the relative humidity and the ambient air temperature,

    **characterized in that** said first and second sensors (11 and 12) are disposed in a single detection device (10).

2. Exchanger according to Claim 1, **characterized in that** it comprises at least one collector box (1B), said detection device (10) being fastened to said at least one collector box (1B).

3. Exchanger according to Claim 2, **characterized in**

**that** said detection device (10) is fastened by clipping to said at least one collector box (1B).

4. Exchanger according to any of the preceding claims, **characterized in that** said first sensor (11) is a negative temperature coefficient thermistor disposed in contact with said at least one collector box (1B).

5. Exchanger according to any of the preceding claims, **characterized in that** it comprises a central part (1A), in which a heat exchange occurs between at least two fluids.

6. Exchanger according to Claim 5, **characterized in that** the central part (1A) is a bundle of tubes or a stack of plates.

7. Exchanger according to Claim 5 or 6, **characterized in that** said sensor (12) is disposed parallel to a surface of said central part (1A).

8. Exchanger according to any of Claims 5 to 7, **characterized in that** the heat exchanger comprises at least one collector box (1B) disposed at each of the two opposite ends of the central part (1A), said ends of said exchanger having a height H, said first and second sensors (11, 12) being disposed at a distance h, measured from an end of said exchanger where a fluid intake is located, that is greater than or equal to 30% of the height H.

9. Exchanger according to the preceding claim, **characterized in that** said first and second sensors (11, 12) are disposed at a distance h of between 60 and 75% of the height H.

10. Exchanger according to any of the preceding claims, **characterized in that** said first and second sensors (11, 12) are connected to a common electrical power supply (14) .

11. Method for limiting frost formation on a heat exchanger (1) according to any of the preceding claims, a value of the dew point temperature $T_{ros}$ being computed by means of measured values of the relative humidity and of the ambient air temperature $T_{amb}$, said value of the dew point temperature $T_{ros}$ being compared to a measured value of the temperature of the wall of said exchanger (1), with measurements for limiting frost formation on said exchanger (1) being applied when the difference $\Delta T$ between the values of the wall temperature of said exchanger (1) and of the dew point temperature is less than a mathematical function dependent on the values of the ambient air temperature $T_{amb}$ and of the dew point temperature $T_{ros}$, **characterized in that** said measurements for limiting frost formation on said exchanger (1) are applied if the wall temperature of said exchanger (1) is, on the one hand, less than 0°C and, on the other hand, less than or equal to the dew point temperature $T_{ros}$.

12. Method according to Claim 11, **characterized in that** said measurements for limiting frost formation are applied when the following inequality is verified:

$$\Delta T \leq \left(\frac{Tamb+400}{273}\right)^{a} \cdot \left(\frac{273}{Tros+273}\right)^{b} \text{,}$$

with the parameter a, which is between 1.4 and 3.2 and the parameter b, which is between 9 and 16.

**Fig. 1**

**Fig. 2**

**Fig. 3**

**Fig. 4**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 2012042207 B